# EUROPEAN PATENT APPLICATION

(11) **EP 2 184 916 A1**
(43) Date of publication of application: **12.05.2010**
(21) Application number: 09175540.5
(22) Date of filing: 10.11.2009
(51) Int. Cl.: H04N 5/44, H04N 5/46, G06F 3/00

(54) **Display apparatus and control method thereof**

(30) Priority: 10.11.2008 KR 20080111191; 19.08.2009 KR 20090076570
(71) Applicant: SAMSUNG ELECTRONICS CO., LTD., Suwon-si Gyeonggi-do 442-742 (KR)
(72) Inventor: Gu, Sung-jin, Gyeonggi-do (KR); Kim, Ji-won, Seoul (KR)
(74) Representative: Robinson, Ian Michael

(57) **Abstract**

Disclosed are a display apparatus having an integrated input port unit to which an external port device provided with a plurality of input ports for a plurality of connectors is connectable, and a control method thereof. The display apparatus includes; an integrated input port unit which receives a video signal output through a selected input port of the external port device; and a controller which controls the external port device to output the video signal received through the selected input port if the external port device is connected to the integrated input port unit, and at least one connector of at least one external device of the external devices is connected to the external port device to output at least one video signal including the video signal to the external port device.

## Description

### BACKGROUND

### 1. Field of Invention

Apparatuses and methods consistent with the present inventive concept relate to a display apparatus and a control method thereof, and more particularly to a display apparatus having an integrated input port unit to which an external port device provided with a plurality of input ports for a plurality of connectors is connectable, and a control method thereof.

### 2. Description of the Related Art

A display apparatus is an apparatus that receives a signal from an external source and outputs video and audio signals. Recently, various external devices are connectable to a display apparatus. Such external devices are, for example, a digital versatile disc (DVD) player, a computer, a universal serial bus (USB) device, an audio system, etc.

To connect the display apparatus with a DVD/blu-ray disc (BD) player, a computer, a USB device, an audio system, etc., the display apparatus needs various input ports that satisfy standard requirements, respectively.

### SUMMARY

According to the present invention there is provided an apparatus and method as set forth in the appended claims. Other features of the invention will be apparent from the dependent claims, and the description which follows.

According to an aspect of the present inventive concept, there is provided a display apparatus including: an integrated input port unit which receives a video signal output through a selected input port of an external port device provided with a plurality of input ports including the selected input port, the plurality of input ports being configured to be connected to connectors of external devices outputting a plurality of video signals, respectively, and the video signal being one of the plurality of video signals; a controller which controls the external port device to output the video signal through the selected input port if the external port device is connected to the integrated input port unit, and at least one connector of at least one external device of the external devices is connected to the external port device to output at least one video signal including the video signal to the external port device; a video processor which processes the video signal for display; and a display unit which displays an image based on the processed video signal.

The controller may identify the external port device on the basis of an identification (ID) signal from the external port device and ID information previously set corresponding to the external port device, if the external port device is connected to the integrated input port unit.

The ID signal may include information about a type and number of input ports.

The display apparatus may further include a user selection unit to select the selected input port among the plurality of input ports through the controller, wherein the controller controls the external port device to output the video signal corresponding to the selected input port.

The display apparatus may further include a user interface (UI) generator, wherein the controller controls the UI generator to display UI information indicating the type and number of the plurality of input ports on the display unit if the external port device is connected to the integrated input port unit.

The controller may control the UI generator to mark a portion of the UI information, corresponding to at least one input port of the plurality of the input ports, if the at least one connector of the at least one external device is connected to at least one input port including the selected input port among the plurality of input ports.

The integrated input port unit may include a plurality of integrated input port units.

According to another aspect of the present inventive concept, there is provided a control method for a display apparatus including an integrated input port unit to which an external port device provided with a plurality of input ports configured to be connected to a plurality of connectors of external devices, is connected, the control method including: receiving an ID signal from the external port device; identifying the external port device on the basis of the ID signal and ID information previously set corresponding to the external port device; controlling the external port device to output one of video signals input through a selected input port among the plurality of input ports; and displaying the video signal, wherein at least one connector of at least one external device of the external devices is connected to the external port device to output at least one video signal including the video signal to the external port device.

The external port device may be controlled so that the video corresponding to the selected input port is output from the external port device by using a user selection unit for selecting the selected input port.

The ID signal may include information about the type and number of input ports.

The control method may further include displaying UI information to indicate information about the type and number of the plurality of input ports of the external port device.

Further, a portion of the UI information may be marked to indicate the type and number of input ports, to which the at least one connector of the at least one external device is connected.

### BRIEF DESCRIPTION OF THE DRAWINGS

The above and/or other aspects of the present invention will become apparent and more readily appreciated from the following description of the exemplary embodiments, taken in conjunction with the accompanying drawings, in which:
FIG. 1 shows a display apparatus according to an exemplary embodiment;
FIG. 2 shows an external port device connectable to an integrated input port unit according to an exemplary embodiment;
FIG. 3 shows an example that the integrated input port unit and the external port device are connected by a connector method, according to an exemplary embodiment;
FIG. 4 shows an example that the integrated input port unit and the external port device are connected by a cable, according to an exemplary embodiment;
FIG. 5 shows an example that the integrated input port unit and the external port device are connected wirelessly, according to an exemplary embodiment.
FIG. 6 shows another example that the integrated input port and the external port device are connected by a cable, according to an exemplary embodiment;
FIG. 7 shows that the display unit displays information about input ports as user interface (UI) information, according to an exemplary embodiment;
FIG. 8 shows that the display unit displays marking of a portion of the UI information corresponding to activated input ports;
FIG. 9A is a detailed block diagram of the display apparatus 100 of FIGs. 1 and 6, according to an exemplary embodiment;
FIG. 9B is a detailed block diagram of the external port device 200 of FIGS. 1 and 6, according to an exemplary embodiment; and
FIG. 10 shows the display apparatus provided with a plurality of integrated input port units, according to an exemplary embodiment.
FIG. 11 shows a control method for the display apparatus 100 of FIGs. 1 and 6, according to an exemplary embodiment.

### DETAILED DESCRIPTION OF EXEMPLARY EMBODIMENTS

Below, exemplary embodiments will be described in detail with reference to accompanying drawings so as to be easily realized by a person having ordinary knowledge in the art. The present inventive concept may be embodied in various forms without being limited to the exemplary embodiments set forth herein. Descriptions of well-known parts are omitted for clarity, and like reference numerals refer to like elements throughout.

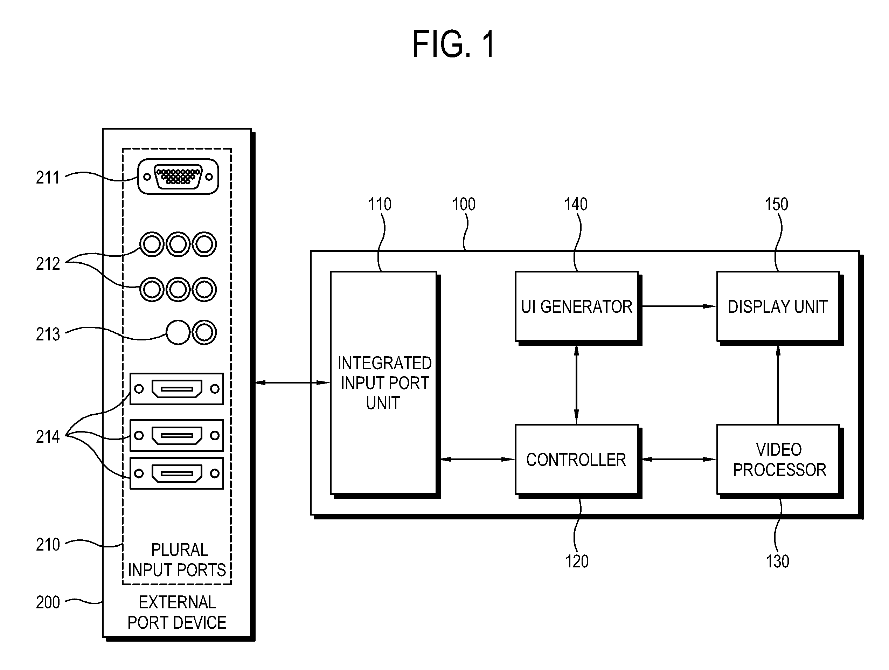

As shown in FIG. 1, a display apparatus 100 according to an exemplary embodiment includes a video processor 130, a display unit 150, an integrated input port unit 110 and a controller 120. Further, the display apparatus 100 additionally includes a user interface (UI) generator 140.

In this exemplary embodiment, the display apparatus 100 includes the video processor 130 which processes a video signal; a display unit 150 which displays an image based on the video signal; an integrated input port unit 110 which receives one of a plurality of video signals output through an external port device 200 provided with a plurality of input ports 210 to which a plurality of connectors (not shown) corresponding to the plurality of video signals can be connected; and a controller 120 which controls the external port device 200 to output one of the video signals received through the plurality of input ports 210, and controls the video processor 130 to display an image based on the video signal input to the integrated input port unit 110.

Further, the display apparatus 100 may additionally include an audio processor (not shown) which processes an audio signal and/or a loudspeaker (not shown) which outputs the audio signal.

The video processor 130 processes a video signal. Here, the video signal can be a video signal received through a broadcasting receiving module (not shown) provided in the display apparatus 100, or a video signal received from an external device such as a set-top box, a digital versatile disc (DVD) player, a blu-ray disc (BD) player, a DVD/BD player, a component video, a composite video, a personal computer (PC), etc.

The display unit 150 includes a cathode ray tube (CRT) and/or various display panels such as a liquid crystal display (LCD) or a plasma display panel (PDP).

The integrated input port unit 110 is placed at one side of the display apparatus 100, and connectable with the external port device 200 provided with the plurality of input ports 210 to which the plurality of connectors corresponding to the plurality of video signals can be connected. Unlike the existing display apparatus directly provided with a plurality of input ports, the display apparatus 100 includes the integrated input port unit 110 connectable with the external port device provided with the plurality of input ports. Thus, it is possible to make the display apparatus physically slim. For example, a related art display apparatus can have only a limited number of input ports due to a limited space within the display apparatus. Particularly, in the case of a wall-mounted display apparatus, it is not easy for a user to connect an external device to the input ports because the input ports are generally placed in the back of the related art display apparatus. On the other hand, the display apparatus 100 need not include the plurality of input ports, so that it can have a slim shape and become more convenient to a user.

The controller 120 controls the external port device 200 to output one of the video signals input through the plurality of input ports, and controls the video processor 130 to display an image based on the video signal input to the integrated input port unit 110. Further, the controller 120 identifies the external port device 200 on the basis of an identification (ID) signal received from the external port device 200 and ID information previously set corresponding to the external port device 200.

The external port device 200 may be provided with the plurality of input ports 210 for a plurality of the same type of input ports and/or a plurality of different types of input ports. In this exemplary embodiment, the plurality of input ports 210 may include an input port 211 for a personal computer (PC), input ports 212 for component video devices, input ports 213 for an S-video device, and input ports 214 for a high definition multimedia interface (HDMI) device.

In this exemplary embodiment, the display apparatus 100 further includes the UI generator 140, and the controller 120 controls the UI generator 140 to display UI information about the type and number of input ports on the display unit 150 when the external port device 200 is connected to the integrated input port unit 110. Also, the controller 120 controls the UI generator 140 to mark a portion of the UI information indicating active input ports, to which the connectors are connected, on the display unit 150.

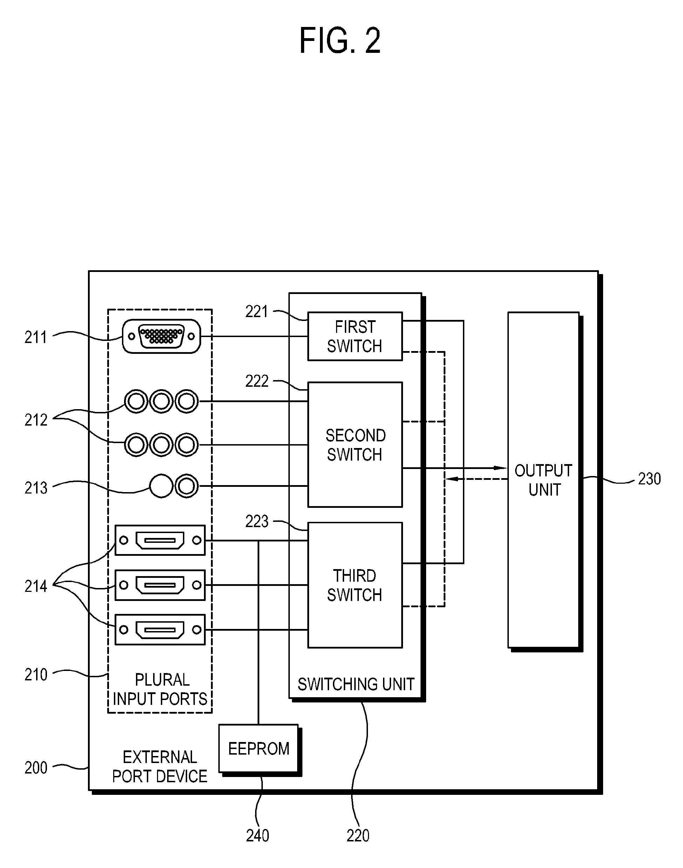

As shown in FIG. 2 illustrating an exemplary embodiment, the external port device 200 includes the plurality of input ports 210 to which the plurality of connectors can be connected; a switching unit 220 which opens (turns on) and closes (turns off) selectively the plurality of input ports 210, and an output unit 230 through which video signals are output.

The plurality of connectors includes connectors of various external devices such as an HDMI device, a PC, a USB device, a DVD player, a BD player, a DVD/BD player, a component video device, a composite video device, an S-video device, an audio device, etc.

The plurality of input ports 210 can connect with the above connectors of various external devices. Alternatively, the plurality of input ports 210 may connect with a plurality of connectors of one external device which provides various video signals through the plurality of connectors. The plurality of input ports 210 may be provided as the plurality of the same types of input ports and/or the plurality of different types of input ports in the external port device 200.

The switching unit 220 opens and closes selectively the plurality of input ports 210 in response to a control signal of the controller 120. The switching unit 220 may include a plurality of switches according to the types of plural input ports. In this exemplary embodiment, the switching unit 220 includes a first switch 221 for the input port 211 to which a connector of a PC can be connected, a second switch 222 for the input ports 212, 213 to which connectors of a component video device or an S-video device can be connected, and a third switch 223 for the input port 214 to which connectors of HDMI devices can be connected.

Even though the plurality of connectors are connected to the plurality of input ports 210, the switching unit 220 may output only at least one selected video signal among the plurality of video signals corresponding to the plurality of connectors to the display apparatus 100 via the output unit 230 in response to the control signal of the controller 120. In this exemplary embodiment, if the controller 120 generates a control signal for outputting the video signal of the component video, the second switch 222 is turned on so that a video signal of the component video can be output to the display apparatus 100 through the output unit 230. At this time, the first switch 221 and the third switch 223 are turned off so that the display apparatus 100 cannot receive any video signal from a PC or an HDMI device.

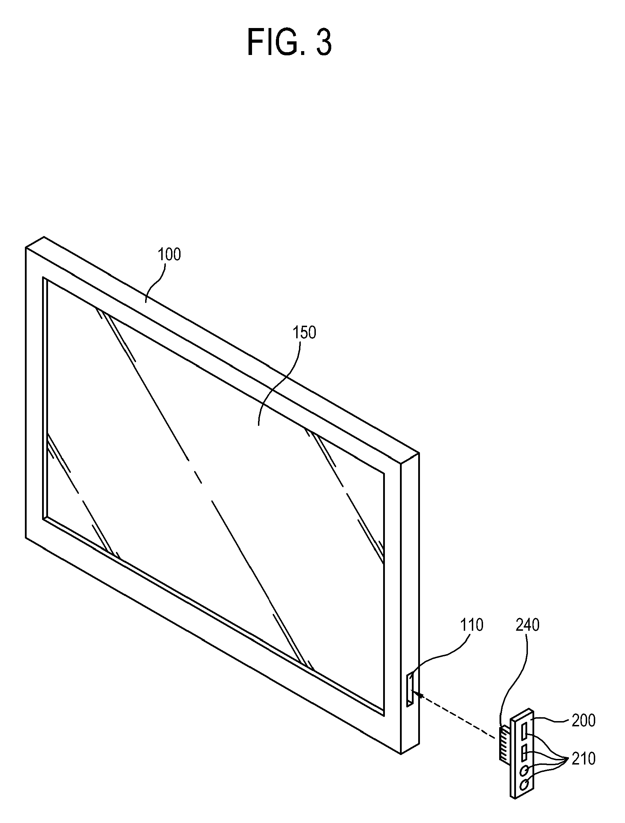

As shown in FIGs. 3 to 5, the integrated input port unit 110 and the external port device 200 can be connected by various methods.

According to an exemplary embodiment as shown in FIG. 3, the integrated input port unit 110 and the external port device 200 can be connected by a connector type terminal 240 provided in the external port device 200 without a cable.

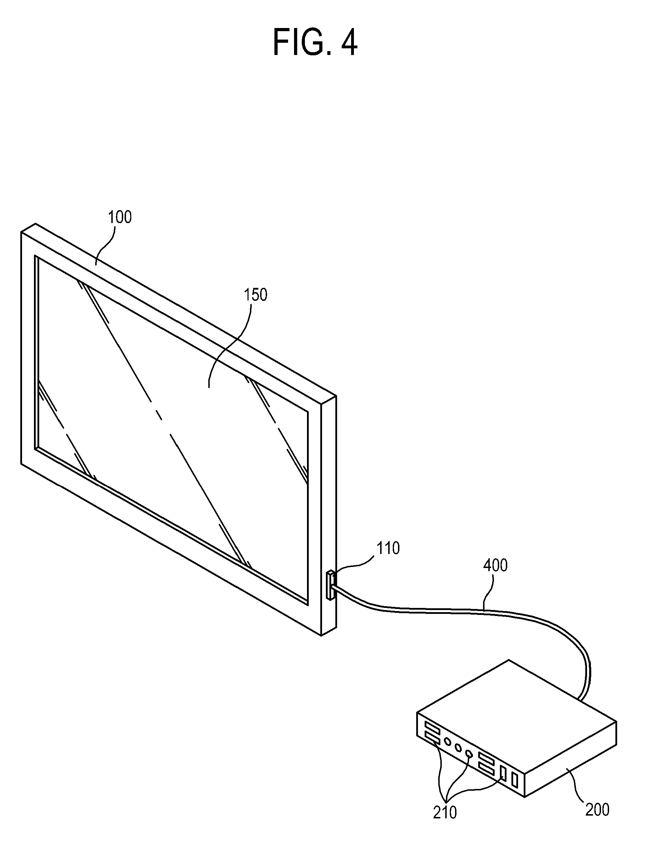

According to an exemplary embodiment as shown in FIG. 4, the integrated input port unit 110 and the external port device 200 can be connected by a cable 400.

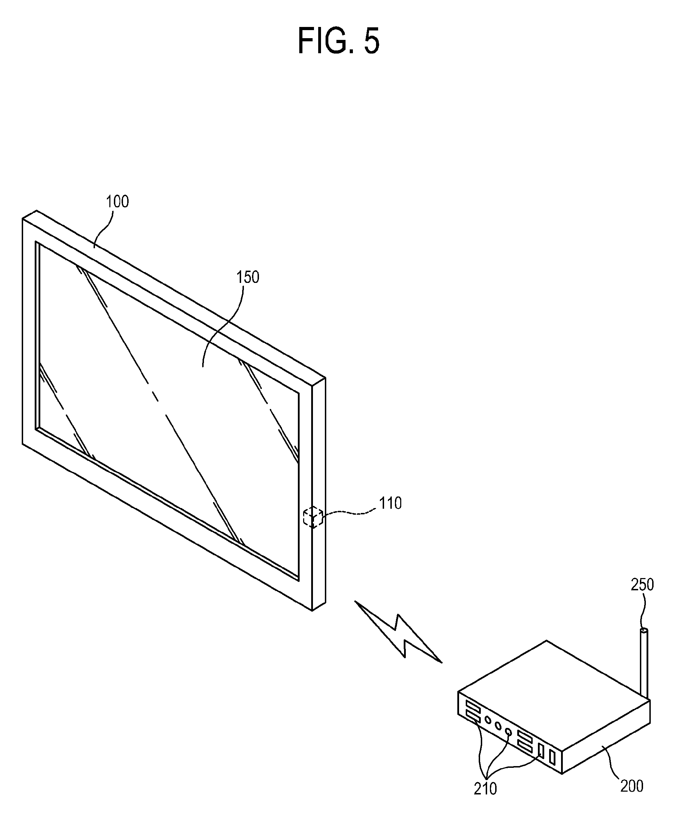

According to an exemplary embodiment as shown in FIG. 5, the integrated input port unit 110 and the external port device 200 can be connected wirelessly. To this end, a transmitting/receiving module 250 may be provided as an external or internal antenna placed outside or inside the external port device 200, respectively. For example, a Bluetooth may be used as the transmitting/receiving module.

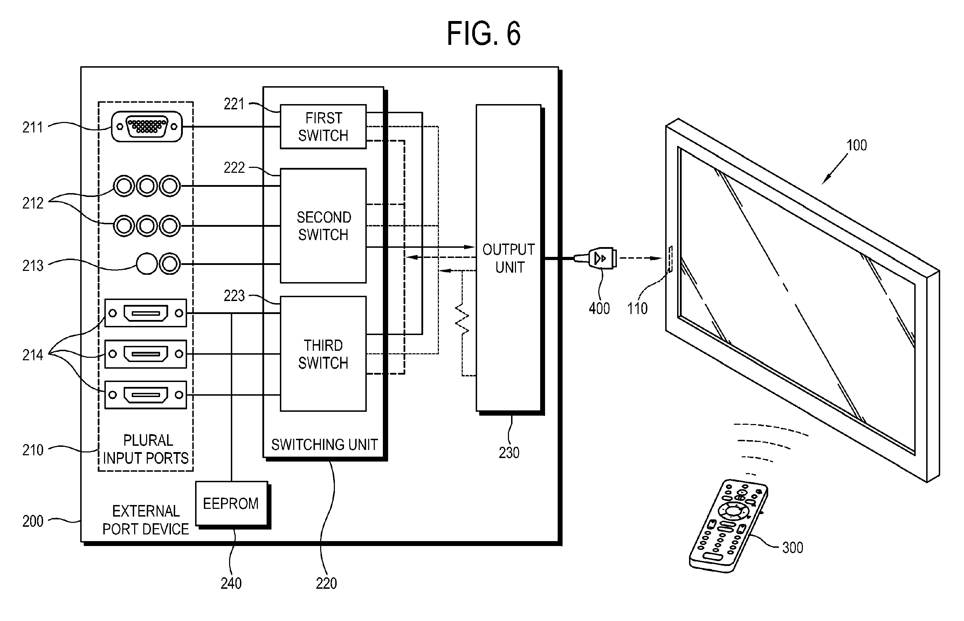

FIG. 6 shows an exemplary embodiment in which the integrated input port 110 and the external port device 200 are connected by a cable 400. The cable 400 may employ a structure of "24p" like a data communication cable of a portable terminal. Thus, it is more convenient for a user to connect the integrated input port 110 and the external port device 200, and there is no limit to the depth corresponding to the length of a connection jack when making the display apparatus 100 slim.

In this exemplary embodiment, the controller 120 can identify the external port device 200 on the basis of an ID signal received from the external port device 200 and ID information previously set corresponding to the external port device 200. The external port device 200 includes a plurality of the same types of input ports and/or a plurality of the different types of input ports, and the ID information is set according to what combination of the plural input ports is provided in the external port device 200.

In this exemplary embodiment, the ID signal may indicate a value "1" if a combination of plural input ports for an HDMI device, a PC and a component video device is provided in the external port device 200. Likewise, the ID signals may indicate values "2" and "3" if plural input ports for HDMI devices and component video devices are provided in the external port device 200, respectively.

Such information about the ID signals for the external port device 200 is stored as preset ID information in the controller 120. Thus, when the external port device 200 is connected to the integrated input port unit 110, the controller 120 compares an ID signal from the external port device 200 with stored preset ID information, thereby identifying the external port device 200.

When grasping the type and number of input ports by identifying the external port device 200, the controller 120 may perform initialization proper to the external port device 200. When the external port device 200 is identified, initialization may be performed by software even though the display apparatus 100 is being turned on.

The ID signal of the external port device 200 can be simply achieved by serial resistors.

The ID signal includes information about the type and number of input ports. Thus, the controller 120 can identify what type and how many input ports are provided in the external port device 110 connected to the integrated input port unit 110.

When the external port device 200 is connected to the integrated input port unit 110, the controller 110 identifies the external port device 200 on the basis of the ID signal and the preset ID information of the external port device 200, and grasps what types and how many input ports are provided in the external port device 200. In this case, the controller 120 controls the UI generator 140 to generate UI information based on the information about the type and number of input ports, and display the UI information on the display unit 150.

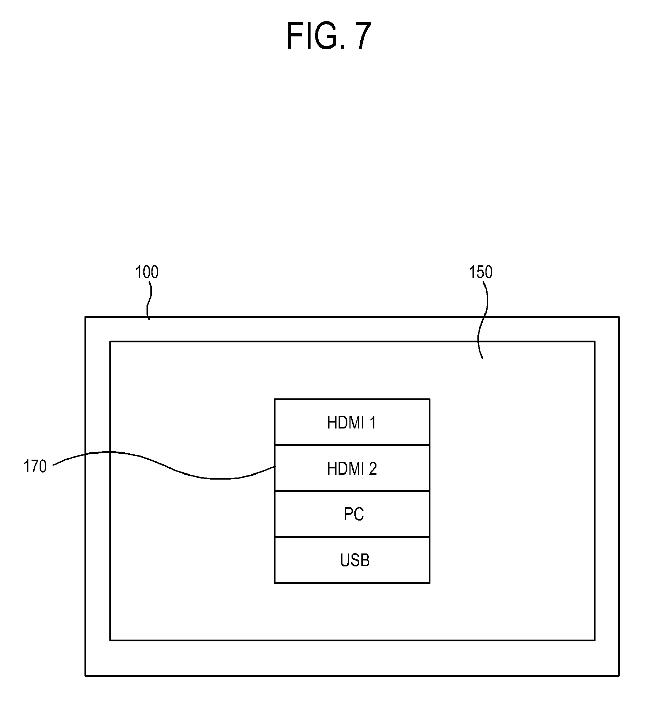

As shown in FIG. 7, according to an exemplary embodiment, if an external port device (not shown) provided with a plurality of input ports, to which two connectors for HDMI devices 1 and 2, a connector for a PC and a connector for a USB device are connectable, is connected to the integrated input port unit 110 of the display apparatus 100 of FIG. 6, the controller 120 may control the UI generator 140 to generate and display UI information 170 about the type and number of the input ports on the display unit 150.

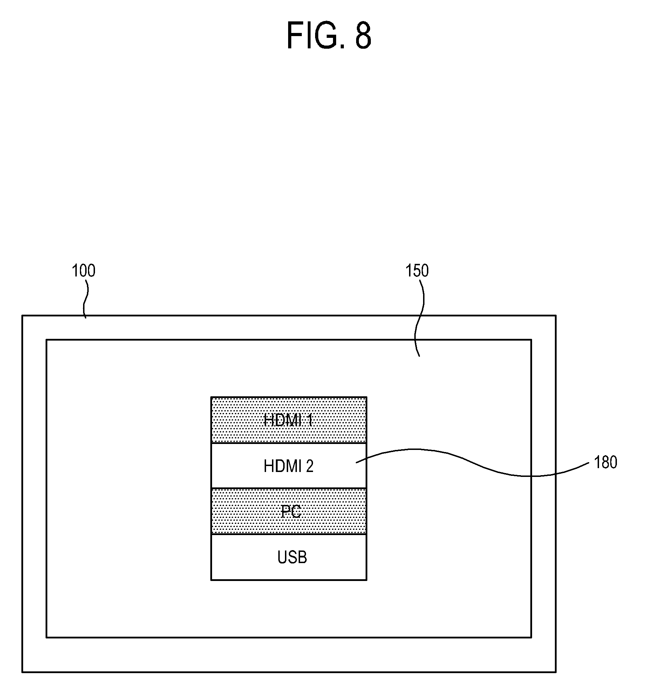

Specifically, the controller 120 controls the UI generator 140 to display the UI information 170 indicating the type and number of the input ports of the external port device 200, as shown in FIG. 7, and further, to mark only a portion of the UI information 170 corresponding to active input ports to which connectors among the above-mentioned four connectors are connected, on the display unit 150, as explained below with reference to FIG. 8.

As shown in FIG. 8, according to an exemplary embodiment, if the external port device, exemplified above with reference to FIG. 7, is connected to the integrated input port unit 110 of the display apparatus 100 of FIG. 6, and one connector for the HDMI device 1 and the connector for the PC are connected to corresponding two input ports of the external port device, respectively, i.e., the HDMI device 1 and the PC are connected to the display apparatus through the external port device, the controller 120 may control the UI generator 140 to generate and display control UI information 180 about the type and number of the input ports of the external port device on the display unit 150, and further control the UI generator 140 to mark only a portion of the UI information 180 corresponding to the two active input ports, to which one connector for the HDMI device 1 and the connector for the PC are connected, respectively, for example, by highlighting that portion.

The UI information 170 and 180 explained above may be achieved in the form of on screen display (OSD).

In this exemplary embodiment, the display apparatus 100 further includes a user selection unit 300 (refer to FIG. 6), and the user selection unit 300 is provided for selecting one of the plural input ports 210.

As shown in FIG. 8, the marked portion of the UI information 180 includes two sub-portions corresponding to the two active input ports, respectively, and one of these two sub-portions is selectable through the user selection unit 300.

If one of the two sub-portions of the marked portion of the UI information 180 is selected through the user selection unit 300, the controller 120 in this exemplary embodiment controls the external port device 200 to output a video signal input from an input port corresponding to the selected sub-portion.

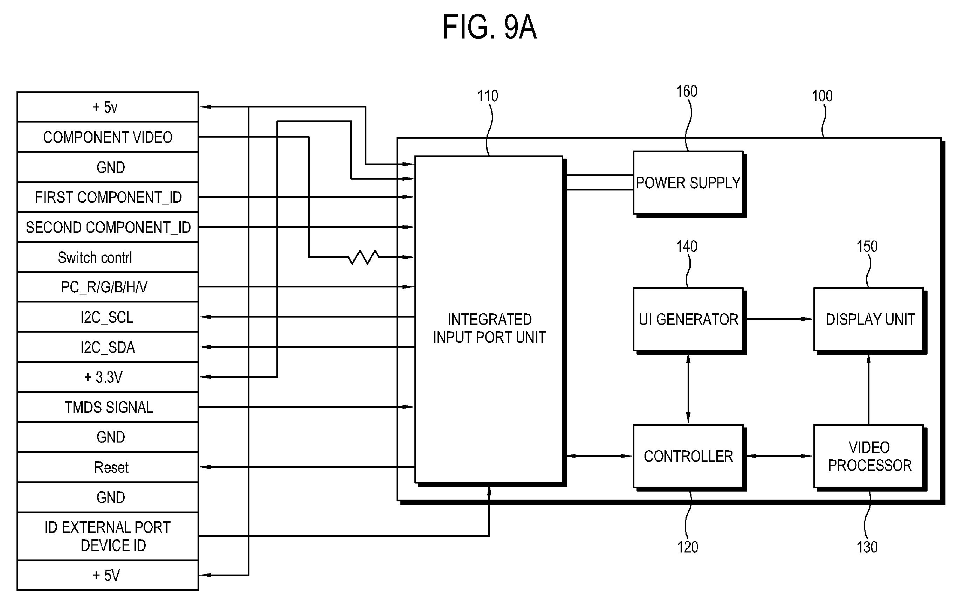

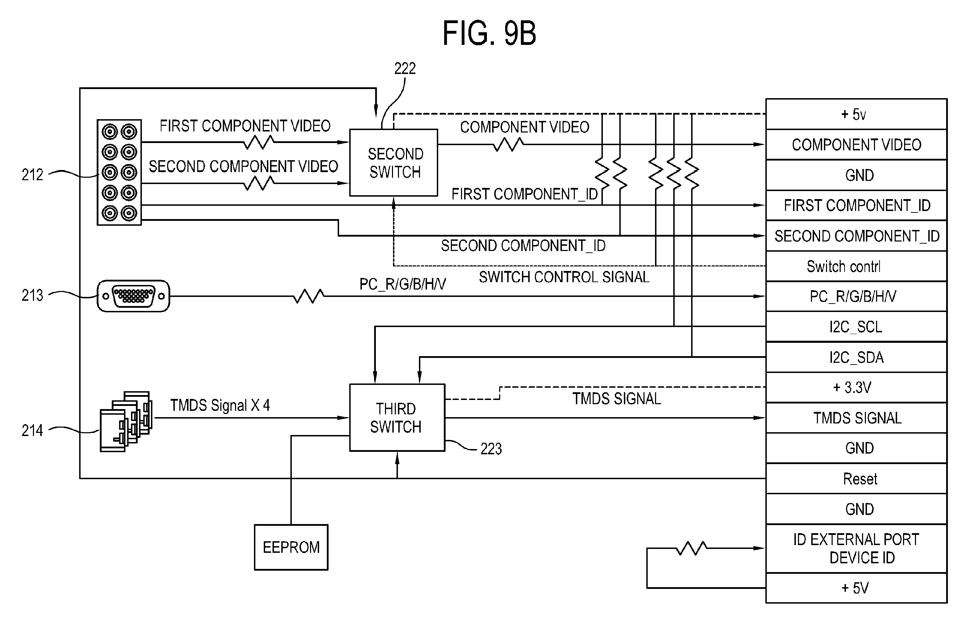

According to an exemplary embodiment, FIG. 9A shows a detailed block diagram of the display apparatus 100 of FIG. 6, and FIG. 9B shows a detailed block diagram of the external port device of FIG. 6.

Through the integrated input port unit 110, in this exemplary embodiment, it is possible to transceive a general signal, electric power and a control signal for controlling the external port device 200 as well as the ID signal of the external port device 200, between the display apparatus 100 and the external port device 200. The general signal may include a video signal, an audio signal, and a jack ID signal. Therefore, the controller 120 in this exemplary embodiment can identify which input port of the external port device 200 is activated on the basis of the jack ID signal independently of the ID signal from the external port device 200.

According to an exemplary embodiment in FIG. 9B, if the external port device 200 with the plurality of input ports 210 is connected to the integrated input port unit 110 of the display apparatus 100, and connectors of a component video device, a PC and an HDMI device are connected to the input ports 212, 213 and 214 (now becoming active input ports by these connections), among the input ports 210, of the external port device 200, the controller 120 compares the ID signal from the external port device 200 with the preset ID information, and thus generates UI information about the type and number of the input ports 210 of the external port device 200, thereby displaying the UI information on the display unit 150. Then, input port connection information is indicated by marking a portion of the UI information corresponding to the three active input ports 212, 213 and 214, among the input ports 210, to which the connectors of the component video device, the PC and the HDMI device are connected. Next, if a sub-portion of the activated portion of the UI information corresponding to one of input ports 212, among the three active input ports 212, 213 and 214, to which the component video device is connected, is selected through the user selection unit 300, the controller 120 controls the second switch 222 to be turned on to output only a video signal input from the component video device, and control the third switch 223 corresponding an input port for an HDMI signal from the HDMI device to be turned off. Thus, the video signal input from the component video device is output through the output unit 230 of the external port device 200 without outputting the HDMI signal from the HDMI device, and then, input to the display apparatus 100 via the integrated input port unit 110. Then, the controller 120 controls the video processor 130 to process the video signal input through the integrated input port unit 110, and display the processed video signal as an image on the display unit 150. Here, the input ports 212 may comprise first and second input ports for first and second component video signals, and the active input port may be only one of the first and second input ports. Further, according to an exemplary embodiment, both of the first and second input ports may be activated at the same time, and portions of UI information corresponding to both of the first and second input ports (which indicates both of the first and second input ports for the input ports 212) may be selected through the user selection unit 300 of FIG. 6 for processing and/or display at the same time. According to an exemplary embodiment, instead of the portion of the UI information corresponding to the first and second input ports, other portions corresponding to at least two different type input ports among the activated input ports 212, 213 and 214 may be selected through the user selection unit 300 of FIG. 6 for processing and/or display at the same time.

If, however, a sub-portion of the marked portion of the UI information corresponding to an input port, to which the HDMI device is connected, is selected through the user selection unit 300, the controller 120 controls the third switch 223 to be turned on to output only a video signal input from the HDMI device, and controls the second switch 222 corresponding to an input port for the component video signal from the component video device to be turned off. Thus, the video signal input from the HDMI device is output through the output unit 230 of the external port device 200 without outputting the component video signal, and then, input to the display apparatus 100 via the integrated input port unit 110. Then, the controller 120 controls the video processor 130 to process the video signal input through the integrated input port unit 110 and display the processed video signal as an image on the display unit 150.

In this exemplary embodiment, the display apparatus 100 may further include a power supply 160 to supply electric power to the external port device.

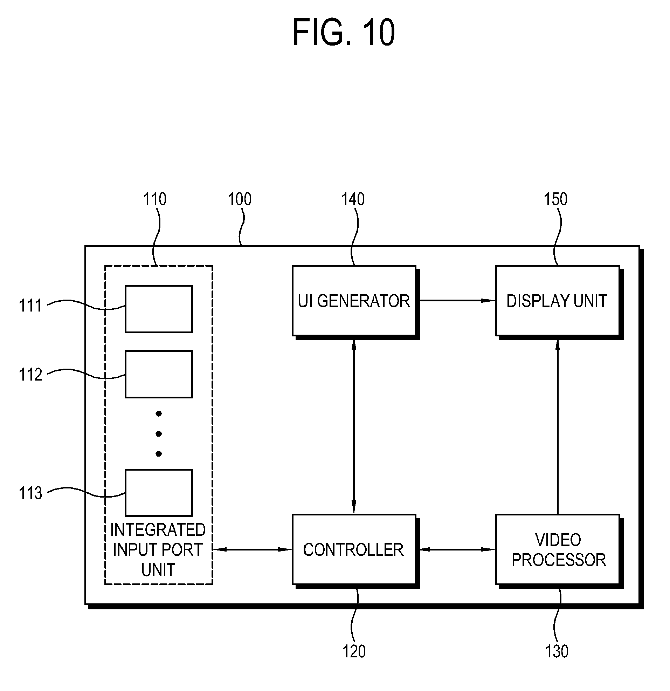

As shown in FIG. 10, the display apparatus 100 may include a plurality of integrated input port units 110, so that a plurality of external port devices different in the type and number of input ports can be connected to the display apparatus 100 through the plurality of integrated input port units 111, 112, 113.

In this exemplary embodiment, the external port device connectable to the integrated input port unit 111 may include a plurality of input ports to which two connectors for an HDMI device and a connector for a PC can be connected; the external port device connectable to the integrated input port unit 112 may include a plurality of input ports to which connectors for an HDMI device, a PC and a USB device can be connected; and the external port device connectable to the integrated input port unit 113 may include a plurality of input ports to which connectors for an HDMI device, a PC, a USB and an S-video device can be connected.

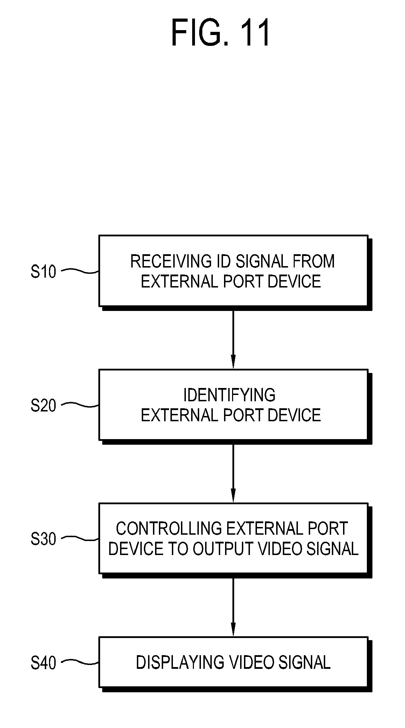

According to an exemplary embodiment with reference to FIGs. 1-10, a control method for the display apparatus 100 as explained above is provided as illustrated in FIG. 11. The control method includes receiving an ID signal from the external port device 200 (S10); identifying the external port device 200 on the basis of the ID signal and ID information previously set corresponding to the external port device 200 (S20); controlling the external port device 200 to output one of video signals input through the plurality of input ports 210 (S30); and displaying the video signal in the display apparatus 100 (S40).

The external port device 200 is controlled in a way in which the display apparatus 100 can receive a video signal input from an input port selected through a user selection unit 300 for selecting one of the plural input ports 210.

The ID signal includes information about the type and number of the plural input ports 210 of the external port device 200.

The control method further includes displaying the UI information 180 to indicate the type and number of the plural input ports 210 of the external port device 200.

When the UI information 180 is displayed, a portion of the UI information 180 corresponding to active input ports to which connectors of external devices are connected is marked, and further, a sub-portion of the portion of the UI information corresponding to the input port can be selected through the user selection unit 300 by a user to output the video signal input from the input port.

Although a few preferred embodiments have been shown and described, it will be appreciated by those skilled in the art that various changes and modifications might be made without departing from the scope of the invention, as defined in the appended claims.

## Claims

1. A display apparatus comprising:
an integrated input port unit which receives at least one video signal output through at least one selected input port of an external port device provided with a plurality of input ports including the at least one selected input port, the plurality of input ports being configured to be connected to connectors of external devices outputting a plurality of video signals, respectively, and the at least one video signal being included in the plurality of video signals;
a controller which controls the external port device to output the at least one video signal through the at least one selected input port if the external port device is connected to the integrated input port unit, and at least one connector of at least one external device among the external devices is connected to the external port device to output video signals including the at least one video signal to the external port device;
a video processor which processes the at least one video signal for display; and
a display unit which displays an image based on the processed at least one video signal.

2. The display apparatus according to claim 1, wherein the controller identifies the external port device based on an identification (ID) signal received from the external port device and ID information previously set corresponding to the external port device, if the external port device is connected to the integrated input port unit .

3. The display apparatus according to claim 2, wherein the ID signal comprises information about a type and number of the plurality of input ports.

4. The display apparatus according to claim 1, further comprising a user selection unit which selects the selected input port among the plurality of input ports through the controller,
wherein the controller controls the external port device to output the video signal corresponding to the selected input port.

5. The display apparatus according to claim 1,
wherein the controller selects, through a user selection unit, the selected input port among at least two input ports of the integrated input port unit which are connected to at least two connectors of the at least one external device to output at least two different video signals including the video signal.

6. The display apparatus according to claim 1, further comprising a user interface (UI) generator,
wherein the controller controls the UI generator to display UI information indicating a type and number of the plurality of input ports of the external port device on the display unit if the external port device is connected to the integrated input port unit.

7. The display apparatus according to claim 1, further comprising a user interface (UI) generator,
wherein the controller controls the UI generator to display UI information indicating a type and number of the plurality of input ports of the external port device on the display unit if the external port device is connected to the integrated input port unit, and
wherein the controller controls the UI generator to mark a portion of the UI information, corresponding to at least one input port of the plurality of the input ports, if the at least one connector of the at least one external device is connected to the at least one input port including the selected input port among the plurality of input ports.

8. The display apparatus according to claim 7, further comprising a user selection unit through which a sub-portion of the portion of the UI information is selected to output the video signal through the selected input port.

9. The display apparatus according to claim 1, comprising a plurality of integrated input port units including the integrated input port unit,
wherein at least one other integrated input port unit differs from the integrated input port unit as the at least one other integrated input port unit comprises a different type or number of the input ports.

10. The display apparatus according to claim 1, wherein, if the external port device is connected to the integrated input port unit and at least one connector of at least one external device of the external devices is connected to the external port device to output at least one video signal,
the controller identifies the external port device based on an identification (ID) signal received from the external port device and ID information previously set corresponding to the external port device, and
the controller identifies which input port of the external port device is connected to the at least one connector of the at least one external device by receiving a jack ID signal from the external port device.

11. A control method for a display apparatus comprising an integrated input port unit to which an external port device, provided with a plurality of input ports configured to be connected to a plurality of connectors of external devices, is connected, the control method comprising:
receiving an identification (ID) signal from the external port device;
identifying the external port device based on the ID signal and ID information previously set corresponding to the external port device;
controlling the external port device to output one of video signals input through a selected input port among the plurality of input ports; and
displaying the video signal,
wherein at least one connector of at least one external device of the external devices is connected to the external port device to output at least one video signal including the video signal to the external port device .

12. The control method according to claim 11, wherein the controlling the external port device comprises controlling the external port device so that the video signal corresponding to the selected input port is output from the external port device by using a user selection unit for selecting the selected input port.

13. The control method according to claim 11, wherein the receiving the ID signal comprises receiving the ID signal comprising information about a type and number of the plurality of input ports.

14. The control method according to claim 11, further comprising displaying user interface (UI) information to indicate information about a type and number of the plurality of input ports of the external port device.

15. The control method according to claim 14, wherein the displaying the UI information comprises marking, by using a user selection unit, a portion of the UI information corresponding to at least one input port, of the plurality of input ports, to which the at least one connector of the at least one external device is connected.
